# EUROPÄISCHE PATENTSCHRIFT

(11) **EP 1 269 119 B1**
(45) Veröffentlichungstag und Bekanntmachung des Hinweises auf die Patenterteilung: **02.06.2004**
(21) Anmeldenummer: 01919203.8
(22) Anmeldetag: 15.03.2001
(51) Int. Cl.: G01C 21/36

(54) **VERFAHREN ZUR ZIELEINGABE AN EINEM NAVIGATIONSGERÄT**
METHOD FOR INPUTTING A DESTINATION INTO A NAVIGATION DEVICE
PROCEDE POUR ENTRER UNE DESTINATION DANS UN APPAREIL DE NAVIGATION

(30) Priorität: 15.03.2000 DE 10012441
(43) Veröffentlichungstag der Anmeldung: 02.01.2003
(73) Patentinhaber: ROBERT BOSCH GMBH, 70442 Stuttgart (DE)
(72) Erfinder: DUCKECK, Ralf, 31137 Hildesheim (DE)
(86) Internationale Anmeldenummer: PCT/DE2001/001021
(87) Internationale Veröffentlichungsnummer: WO 2001/069178

(56) Entgegenhaltungen:
- EP-A- 0 747 835
- EP-A- 0 789 224
- EP-A- 0 827 124
- EP-A- 0 978 707

## Beschreibung

Die Erfindung geht von einem Verfahren zur Zieleingabe an einem Navigationsgerät, wobei Zeichen eines Zielnamens eingegeben werden und in Abhängigkeit des oder der eingegebenen Zielnamen eine Liste von Zielnamen erzeugt wird, nach dem Oberbegriff des unabhängigen Patentanspruchs aus.

Es ist ein Verfahren zur Zieleingabe an Navigationsgeräten, beispielsweise der Firma Blaupunkt-Werke GmbH, Hildesheim, bekannt, bei dem ein einem Navigationsziel zugeordneter Zielname buchstabenweise durch Blättern innerhalb eines Alphabets mittels einer dafür vorgesehenen Blättertaste und Bestätigen eines ausgewählten Buchstabens mit einer Bestätigungstaste eingegeben wird. Zu jedem eingegebenen Buchstaben oder jeder Folge von eingegebenen Buchstaben wird eine Zielnamenliste erzeugt, die solche Zielnamen enthält, die mit dem oder den eingegebenen Buchstaben beginnen. Aus dieser Liste ist ein Zielname auswählbar. Alternativ können zur Verkürzung der Liste weitere Buchstaben des Zielnamens eingegeben werden.

Diese bekannte Form der Zieleingaben ist schon wegen des Erfordernisses des Blätterns innerhalb des mit 29 Buchstaben inklusive Umlaute recht umfangreichen deutschen Alphabets aufwendig.

Das beschriebene Verfahren wurde daher dahingehend modifiziert, daß nach Eingabe eines oder mehrerer Buchstaben des Zielnamens für eine weitere Buchstabeneingabe nur solche Buchstaben angeboten werden, die in Verbindung mit dem oder den bereits eingegebenen Buchstaben einen in einer Ortsdatenbank enthaltenen Zielnamen ergeben. Dieses Verfahren ist unter dem Stichwort "ausgedünnter Speller" bekannt. Ein derartiges Verfahren ist beispielsweise aus der EP 0 747 835 A1 bekannt.

### Vorteile der Erfindung

Das erfindungsgemäße Verfahren mit den Merkmalen des unabhängigen Patentanspruchs, bei dem eine Zielnamenliste nach der Entfernung der den Zielnamen zugeordneten Ziele von einem aktuellen Standort erzeugt wird, hat demgegenüber den Vorteil einer weiteren Erleichterung einer Zieleingabe.

Erfindungsgemäß wird dies dadurch erreicht, daß die Zielnamenliste nur solche Zielnamen enthält, deren zugeordnete Zielorte innerhalb eines vorgegebenen Umkreises um den aktuellen Standort liegen. Hierdurch wird in der Regel eine deutliche Verkürzung der Zielnamenliste erreicht. Dies ermöglicht dem Benutzer eine schnellere Orientierung innerhalb der Zielnamenliste und somit ein schnelleres Auffinden des gewünschten Zielnamens.

Gemäß einer Ausführungsform wird erreicht, daß die Liste nach der Entfernung der den Zielnamen zugeordneten Ziele vom aktuellen Standort sortiert wird. Zwar wird hierdurch der Umfang der Zielnamenliste nicht reduziert, jedoch wird dem Benutzer eine Orientierung innerhalb der Zielnamenliste durch das zusätzliche Entfernungskriterium erleichtert.

Eine Erleichterung ergibt sich dadurch daß die Zielnamenliste nur solche Zielnamen enthält, deren zugeordnete Zielorte innerhalb eines vorgegebenen Umkreises um den aktuellen Standort liegen und darüber hinaus diese Liste nach der Entfernung der den Zielnamen zugeordneten Ziele vom aktuellen Standort sortiert wird.

Um eine Verwirrung des Benutzers zu vermeiden, ist es weiterhin von Vorteil, wenn vor einer entfernungsabhängigen Sortierung der den Zielorten zugeordneten Zielnamen die Zielnamen vorrangig alphabetisch sortiert und erst als niederwertigeres Kriterium nach der Entfernung vom aktuellen Standort sortiert werden.

### Zeichnungen

Ausführungsbeispiele der Erfindung sind in den Zeichnungen dargestellt und werden nachfolgend näher erläutert.

Es zeigen
Figur 1 ein Blockschaltbild eines Navigationsgeräts zur Durchführung des erfindungsgemäßen Verfahrens und
Figur 2 ein Ablaufdiagramm des erfindungsgemäßen Verfahrens.

### Beschreibung der Ausführungsbeispiele

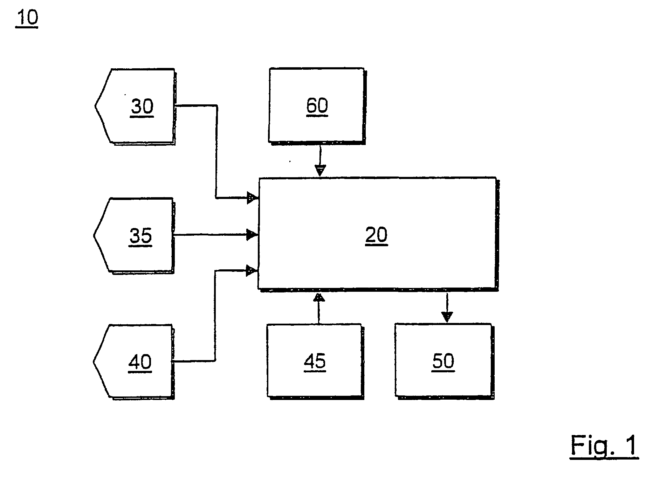

Figur 1 zeigt ein Blockschaltbild eines Navigationsgeräts 10 am Beispiel eines Fahrzeugnavigationssystems zur Durchführung des erfindungsgemäßen Verfahrens.

An eine Gerätesteuerung 20 des Navigationsgeräts 10, die unter anderem auch den eigentlichen Navigationsrechner umfaßt, sind zum einen Mittel 30, 35, 40 angeschlossen, die Informationen über den Standort, die Bewegungsrichtung und den Bewegungszustand des Fahrzeugs abgeben.

Beim vorliegenden Ausführungsbeispiel handelt es sich dabei um einen Drehratensensor 30, mit dessen Hilfe durch Integration über die erfaßten Drehratenänderungen die Orientierung des Fahrzeugs, in dem das Navigationsgerät installiert ist, bezüglich der Himmelsrichtungen erfaßt wird. Weiter handelt es sich dabei um einen Wegstreckenmesser 35, der beispielsweise von Radsensoren eines Antiblockiersystems für Fahrzeugbremsen abgegebene Impulse erfaßt und aus der festgestellten Impulszahl und einem bekannten Radumfang eine zurückgelegte Fahrtstrecke ermittelt. Schließlich handelt es sich dabei um einen GPS-(Global Positioning System-) Empfänger 40 zum Empfang und zur Auswertung von von GPS-Satelliten ausgestrahlten Funksignalen, anhand derer die Position des Fahrzeugs feststellbar ist.

Weiterhin ist an die Steuerung 20 ein Speicher 60 angeschlossen, in dem Informationen einer Land- bzw. Straßenkarte in digitaler Form gespeichert sind. Beim vorliegenden Ausführungsbeispiel ist der Speicher 60 in Form eines CD-ROM-Laufwerks mit eingelegter CD-ROM als Datenträger für die Landkarteninformationen realisiert. Ebenso kann es jedoch auch vorgesehen sein, daß der Speicher 60 in Form eines RAM- bzw. ROM-Halbleiterspeichers realisiert ist.

Die im Speicher 60 enthaltenen Informationen umfassen insbesondere Orte und Städte einer Region oder eines Landes, deren geographische Lage, die vorzugsweise in geographischen Längen- und Breitengraden angegeben ist, sowie deren zugeordnete Ortsnamen. Weiterhin umfassen die Informationen im Falle des vorliegenden Fahrzeugnavigationsgeräts die für Fahrzeuge nutzbaren Verkehrsverbindungen zwischen den Orten und Städten, also insbesondere Autobahnen, Bundes-, Landund Kreisstraßen, sowie innerstädtische oder sonstige Straßen.

Im Falle eines zum Beispiel für Fahrräder, sonstige nicht an öffentliche Straßen gebundene Fortbewegungsmittel oder Fußgänger vorgesehenen Navigationsgeräts umfassen die im Speicher 60 enthaltenen Informationen vorzugsweise ergänzende Informationen über Fahrradwege, Fußwege und ähnliche Verkehrswege.

Darüber hinaus können die Informationen zusätzlich zu Orten mit geographischer Lage und Ortsnamen auch Ziele innerhalb von Orten, wie beispielsweise Sportanlagen, wie Tennisplätze, Schwimmbäder, Fußballplätze, kulturelle Einrichtungen, wie Opernhäuser, Theater, Museen, oder auch Hinweise auf alternative Verkehrsinfrastruktur, wie Bushaltestellen, Bahnhöfe und ähnliches mit jeweils einem Ortsnamen und einer geographischen Lage des Ziels enthalten.

Weiterhin ist an die Steuerung 20 eine Ausgabeeinheit 50 angeschlossen, bei der es sich im vorliegenden Fall um eine Anzeigevorrichtung handelt. Auf dieser werden während des eigentlichen Navigationsvorganges Fahranweisungen für den Fahrzeugführer, beispielsweise in Form eines Richtungspfeiles bei bevorstehenden Abbiegevorgängen und einer Restentfernungsanzeige bis zum Abbiegevorgang, dargestellt. Ebenso ist es jedoch auch möglich, daß ergänzend oder alternativ zur optischen Anzeige die Ausgabeeinheit 50 eine akustische Ausgabevorrichtung umfaßt, über die akustische Fahrtanweisungen, wie z. B. ,nach 100 Metern rechts abbiegen' oder ähnliches, ausgegeben werden.

Schließlich ist an die Steuerung 20 eine Eingabeeinheit 45 mit nicht dargestellten Bedienelementen, wie Drucktasten oder anderen Eingabemitteln, wie z. B. Drehknöpfen, zur Eingabe eines Navigations-Zielpunktes sowie zur Bedienung weiterer Funktionen des Geräts angeschlossen.
Die Steuerung 20 ist vorzugsweise in Form eines programmgesteuerten Mikroprozessors zur Durchführung der im Rahmen einer Routenberechnung in einem Fahrzeugnavigationsgerät und/oder zur Fahrzielführung durch ein Fahrzeugnavigationsgerät erforderlichen Abläufe und Berechnungen ausgeführt. Insbesondere führt die Steuerung die Abläufe
- Einlesen eines durch den Fahrzeugführer mittels der Eingabeeinheit 45 vorgegebenen Zielortnamens, daneben Steuerung der Zielorteingabe, beispielsweise durch eine Plausibilitätsprüfung eines eingegebenen Ortsnamens oder Ortsnamensbestandteils durch Vergleich mit im Speicher 60 enthaltenen Ortsnamen,
- Zuordnung von Ortskoordinaten zu dem vorgegebenen Zielort aufgrund der im Speicher 60 abgelegten Kartendaten,
- Bestimmung des aktuellen Fahrzeugstandorts aus den durch den Drehratensensor, den Wegstreckenmesser und den GPS-Empfänger zugeführten Positions- oder zu Berechnung der Position geeigneten Daten,
- Berechnung einer Fahrtroute vom aktuellen Fahrzeugstandort zum durch den Benutzer oder auch anderweitig vorgegebenen Zielort auf Grundlage der im Speicher 60 abgelegten Kartendaten,
- Vergleich der aktuellen Fahrzeugposition mit auf der berechneten Route liegenden markanten Punkten, insbesondere Abbiegepunkten,
- Erzeugung von Fahranweisungen zur Zielführung des Fahrzeugführers bei Erreichen auf der Route liegender markanter Punkte
- Vergleich der aktuellen Fahrzeugposition mit der berechneten Fahrtroute zur Feststellung einer eventuellen Abweichung der Fahrzeugposition von der Fahrtroute infolge eines Nichtbefolgens einer Fahranweisung oder eines nicht vorgesehenen Abbiegevorgangs und erforderlichenfalls
- Neuberechnung der Fahrtroute aus.
   Im Zusammenhang mit der vorliegenden Erfindung steuert die Steuerung 20 darüber hinaus insbesondere die Eingabe eines Navigationsziels und umfaßt dazu insbesondere die Funktionen
- Einlesen durch den Benutzer eingegebener Zeichen als Teil eines Zielnamens,
- Bestimmung eines aktuellen Standorts
- Auslesen solcher Ziele aus dem Speicher 60, die in einem vorgegebenen Umkreis um den aktuellen Standort liegen und deren zugeordnete Zielnamen mit den eingegebenen Buchstaben beginnen, oder Auslesen aller Ziele, deren zugeordneter Zielname mit den eingegebenen Buchstaben beginnt
- Sortieren der ausgelesenen Ziele, vorzugsweise in alphabetischer Reihenfolge oder nach ihrer Entfernung vom aktuellen Standort,
- Ausgeben der sortierten Liste der ausgelesenen Ziele,
- Einlesen einer Auswahl eines durch den Benutzer ausgewählten Ziels aus der Liste und Übernahme dieses Ziels als Ziel für die nächste Routenberechnung und den nächsten Zielführungsvorgang.

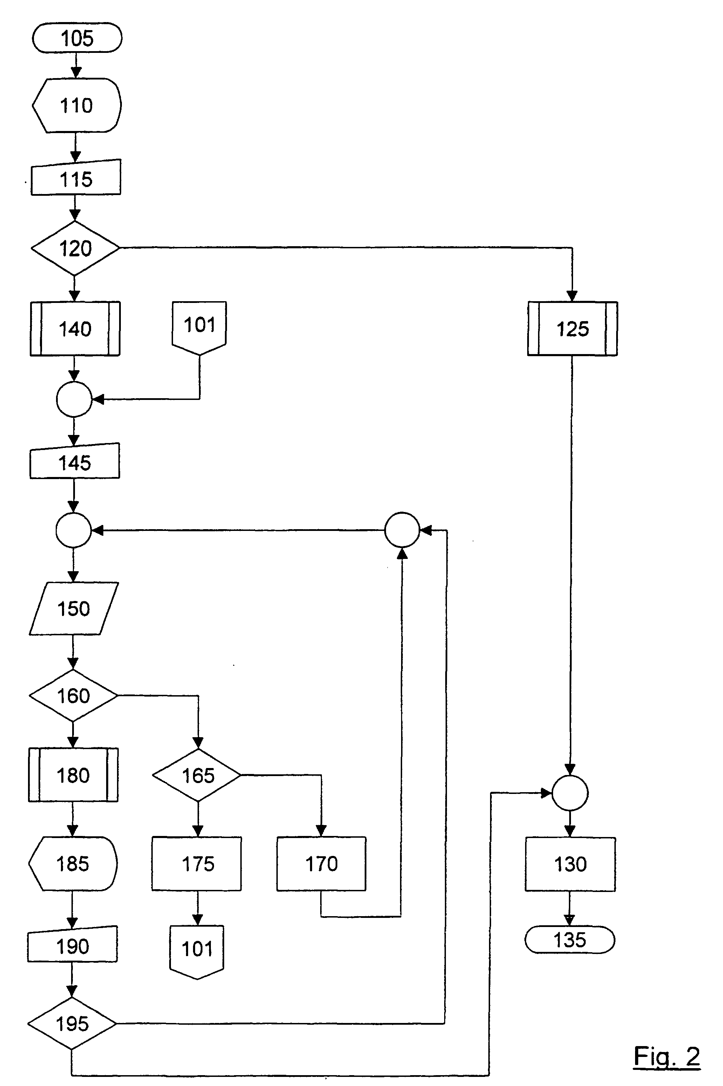

Das erfindungsgemäße Verfahren zur Zieleingabe an einem Navigationsgerät wird nachfolgend anhand des in Figur 2 dargestellten Ablaufplans näher erläutert.

Der Ablauf beginnt in Schritt 105 mit Einschalten des Fahrzeugnavigationsgeräts, beispielsweise mit Einschalten der Fahrzeugzündung des Fahrzeugs, in dem das Navigationsgerät 10 betrieben wird.

Anschließend wird der Fahrzeugführer zu einer Auswahl aufgefordert, ob ein Ziel aus der Umgebung des aktuellen Fahrzeugstandorts ausgewählt werden soll, wobei standardmäßig die Umgebung beispielsweise als ein Umkreis von 50km um den aktuellen Standort definiert ist, oder ob die Zieleingabe in gewöhnlicher Art und Weise erfolgen soll (Schritt 110). Weiter kann vorgesehen sein, daß die Umgebung, innerhalb der das Navigationsziel liegen soll, durch den Benutzer vorgegeben wird.

Darauf wird der durch den Benutzer vorzugebende Eingabemodus abgefragt (Schritt 115). Der Benutzer kann hier vorzugsweise vorgeben, daß
- das Ziel in herkömmlicher Art und Weise eingegeben werden soll,
- das Ziel innerhalb einer vordefinierten Umgebung, beispielsweise einem Umkreis von 50km um den aktuellen Standort liegen soll,
- das Ziel innerhalb eines durch den Benutzer vorzugebenden Umkreises um den aktuellen Standort liegen soll, wobei die Ausdehnung des Umkreises abgefragt wird.

Weiter kann vorzugsweise die Art der Ausgabe gefundener Ziele zu einem oder mehreren durch den Benutzer vorgegebenen Zeichen des Zielnamens durch den Benutzer vorgegeben werden, nämlich ob
- die Liste der gefundenen Ziele in alphabetischer Reihenfolge ausgegeben werden soll,
- die Liste der gefundenen Ziele nach der Entfernung der Ziele vom aktuellen Standort sortiert, ausgegeben werden soll, oder
- die Liste der gefundenen Ziele in alphabetischer Reihenfolge der gefundenen Ziele, und im Falle mehrerer Ziele gleichen Zielnamens oder wesentlichen Zielnamensbestandteils, wie zum Beispiel Neustadt/Weinstraße, Neustadt/Donau, nach der Entfernung der Ziele vom aktuellen Standort sortiert, also im Falle eines angenommenen aktuellen Standorts bei Kaiserslautern in der Reihenfolge 1. Neustadt/Weinstraße, 2. Neustadt/Donau, ausgegeben werden soll, wobei in diesem Fall der Ortsname Neustadt den wesentlichen Zielnamensbestandteil darstellt.

Wird eine herkömmliche Zieleingabe gewünscht, was in Schritt 120 festgestellt wird, so erfolgt diese in an sich bekannter und daher nicht näher beschriebener Weise in Schritt 125. Der so eingegebene Zielname wird einem im Speicher enthaltenen Zielort zugeordnet (Schritt 130), worauf der Zieleingabevorgang endet (Schritt 135).

Wird hingegen eine Eingabe eines Ziels in der standardmäßig oder einer benutzerdefiniert vorgegebenen Umgebung gewünscht, was in Schritt 120 überprüft wird, so wird der Ablauf mit der Bestimmung des aktuellen Standorts aus den Informationen der Sensoren 30, 35 und 40 und einem Abgleich des aufgrund der Sensorsignale berechneten Standorts mit den im Speicher 60 abgelegten Karteninformationen im Sinne einer Plausibilitätsprüfung, die unter dem Stichwort "map matching" in der Fachliteratur bekannt ist, fortgesetzt (Schritt 140).

Anschließend erfolgt die Eingabe eines ersten Buchstabens des Zielnamens durch den Benutzer (Schritt 145). Diese Buchstabeneingabe erfolgt durch Anwahl eines Buchstabens aus einem auf der Anzeigeeinheit 50 dargestellten Alphabet, beispielsweise durch Verschieben eines Cursors auf den auszuwählenden Buchstaben mittels Cursorsteuertasten und anschließende Bestätigung des markierten Buchstabens, vorzugsweise mittels einer Bestätigungstaste der Eingabeeinheit 45.

Nach Eingabe eines Buchstabens werden aus dem Speicher 60 diejenigen Ziele ausgelesen,
1. die in dem vorgegebenen Umkreis oder der Umgebung um den aktuellen Standort liegen und
2. deren zugeordnete Zielnamen mit dem oder den bereits eingegebenen Buchstaben beginnen
   (Schritt 150).

Die Entfernung eines in den Kartendaten des Speichers 60 ermittelten Ziels vom aktuellen Standort wird vorzugsweise aufgrund der geographischen Daten der aktuellen Position und der geographischen Lage des Ziels, vorzugsweise als Luftlinienentfernung bestimmt,

Wird festgestellt, daß ein Ziel bzw. Zielname, der die genannten Kriterien erfüllt, im Speicher nicht aufzufinden ist (Schritt 160), und wird weiter festgestellt, daß die Ausdehnung der Umgebung einen Maximalwert von beispielsweise 1000km noch nicht überschritten hat (Schritt 165), wird die Ausdehnung der standardmäßig oder benutzerdefiniert vorgegebenen Umgebung vergrößert (Schritt 170) und erneut im Speicher 60 nach Zielen gesucht, die
1. in dem - nun erweiterten - vorgegebenen Umkreis oder der Umgebung um den aktuellen Standort liegen und
2. deren zugeordnete Zielnamen mit dem oder den bereits eingegebenen Buchstaben beginnen
   (Schritt 150).

Wird hingegen in Schritt 165 festgestellt, daß trotz maximaler Ausdehnung der Umgebung ein den angegebenen Kriterien genügendes Ziel im Speicher 60 nicht vorhanden ist, wird davon ausgegangen, daß ein mit dem oder den eingegebenen Buchstaben beginnender Zielname und ein zugehöriges Ziel im Speicher 60 nicht vorhanden ist.

Der oder die bis dahin eingegebenen Buchstaben sind somit nicht Teil eines gültigen Zielnamens. Daher wird der zuletzt eingegebene Buchstabe gelöscht (Schritt 175) und der Ablauf wird mit der Eingabe eines, oder sofern zuvor bereits mehr als ein Buchstabe eingegeben wurde, mit der Eingabe eines weiteren Buchstaben des Zielortnamens fortgesetzt (Schritt 145; über Sprungstelle 101).

Wird in Schritt 160 hingegen festgestellt, daß ein oder mehrere Ziele, die in der vorgegebenen oder erweiterten Umgebung des aktuellen Standorts liegen und deren Zielnamen mit dem oder den eingegebenen Buchstaben beginnt, im Speicher 60 vorhanden sind, werden im Falle mehrerer Ziele diese je nach Vorgabe in Schritt 115 entweder alphabetisch oder nach ihrer Entfernung vom aktuellen Standort oder alphabetisch als oberstem Sortierkriterium und im Falle mehrerer gleich lautender Zielnamen oder Zielnamenhauptbestandteile nachrangig nach ihrer Entfernung zum aktuellen Standort sortiert, wobei die in Schritt 150 ermittelten Entfernungswerte zugrunde gelegt werden.

Anschließend wird die Liste der Ziele, vorzugsweise in Form der den Zielen zugeordneten Zielnamen auf der Anzeigeeinheit entsprechend dem vorgegebenen Sortierkriterium dargestellt (Schritt 185).

Der Benutzer hat nun die Möglichkeit, einen weiteren Buchstaben des Zielnamens in beschriebener Weise an der Bedieneinheit 45 einzugeben (Schritt 190). Erfolgt eine solche weitere Buchstabeneingabe, was in Schritt 195 überprüft wird, so wird nachfolgend in Schritt 150 in den im Speicher 60 abgelegten Kartendaten eine erneute Suche nach Zielen durchgeführt, die innerhalb der vorgegebenen Umgebung des aktuellen Standorts liegen und deren Zielnamen mit den eingegebenen Zeichen beginnen.

Alternativ hat der Benutzer die Möglichkeit, aus der auf der Anzeigeeinheit 50 dargestellten Liste von Navigationszielen oder Zielnamen durch Anwählen eines Eintrags mittels des Cursors über die Cursorsteuertasten und Bestätigen eines angewählten Ziels oder Zielnamens, dieses oder diesen auszuwählen (Schritt 190). Ist ein Ziel oder Zielname ausgewählt worden, was in Schritt 195 abgefragt wird, wird das ausgewählte Ziel oder das zu dem ausgewählten Zielnamen zugehörige Ziel als Navigationsziel übernommen (Schritt 130) und der Zieleingabeablauf beendet (Schritt 135).

## Patentansprüche

1. Verfahren zur Zieleingabe an einem Navigationsgerät, wobei Zeichen eines Zielnamens eingegeben werden und in Abhängigkeit des oder der eingegebenen Zeichen eine Liste von Zielnamen erzeugt wird, die mit dem oder den eingegebenen Zeichen beginnen,
**dadurch gekennzeichnet,**
**daß** nur solche Zielnamen in die Zielnamenliste aufgenommen werden, deren zugeordnete Ziele in einem durch eine Entfernung vom aktuellen Standort definierten vorgegebenen Umkreis des aktuellen Standorts liegen.

2. Verfahren nach Anspruch 1, **dadurch gekennzeichnet, daß** die Liste nach der Entfernung der den Zielnamen zugeordneten Ziele vom aktuellen Standort sortiert wird.

## Claims

1. Method for inputting a destination into a navigation device, in which characters of a destination name are input and, as a function of the input character or characters, a list of destination names which begin with the input character or characters is generated, **characterized in that** only destination names whose assigned destinations are in a predefined area around the current location, defined by a distance from the current location, are entered into the list of destination names.

2. Method according to Claim 1, **characterized in that** the list is sorted according to the distance between the destinations assigned to the destination names and the current location.

## Revendications

1. Procédé pour entrer une destination dans un appareil de navigation, dans lequel des signes d'un nom de destination sont entrés et une liste de noms de destination qui commencent par le ou les signe(s) entré(s) est générée en fonction du ou des signe(s) entrés,
**caractérisé en ce que**
seuls les noms de destination, dont les destinations associées sont comprises dans un périmètre prédéterminé du lieu actuel défini selon l'éloignement par rapport au lieu actuel, sont enregistrés dans la liste de noms de destination.

2. Procédé selon la revendication 1,
**caractérisé en ce que**
la liste est classée d'après l'éloignement des destinations associées aux noms de destination par rapport au lieu actuel.
